# EUROPEAN PATENT SPECIFICATION

(11) **EP 3 110 385 B1**
(45) Date of publication and mention of the grant of the patent: **29.08.2018**
(21) Application number: 15706285.2
(22) Date of filing: 20.02.2015
(51) Int. Cl.: A61G 7/00, A61G 7/057

(54) **ALTERNATING PRESSURE MATTRESS, SYSTEM AND CONNECTOR**
WECHSELDRUCKMATRATZE, SYSTEM UND VERBINDUNGSSTÜCK
SURMATELAS PNEUMATIQUE À PRESSION ALTERNÉE, SYSTÈME ET CONNECTEUR

(30) Priority: 27.02.2014 GB 201403447
(43) Date of publication of application: 04.01.2017
(73) Proprietor: Rober Limited, Chesterfield, Derbyshire S40 2AB (GB)
(72) Inventor: HUTSON, Michael, Chesterfield Derbyshire S41 0FB (GB)
(74) Representative: HGF Limited
(86) International application number: PCT/GB2015/050504
(87) International publication number: WO 2015/128618

(56) References cited:
- EP-A1- 2 532 281
- EP-A2- 0 382 484
- EP-A2- 0 823 248
- WO-A1-98/20828
- WO-A1-03/006868
- TW-U- M 254 209
- TW-U- M 471 262
- US-A1- 2011 094 040
- US-B1- 6 253 402

## Description

This invention relates to an air mattress for the prevention and treatment of bed sores.

### BACKGROUND

Bed sores, or pressure ulcers, are likely to occur when a patient is bed ridden for a long period of time, causing parts of the body that are in contact with the mattress to be constantly subjected to pressure. This results in obstructed blood flow, which can damage the affected tissue and ultimately leads to bed sores.

In hospitals, patients who are deemed to be at risk of developing a bed sore are generally provided with an alternating pressure mattress. Such mattresses typically include a plurality of inflatable transverse cells divided into two or more groups of cells, which groups of cells are cyclically inflated and deflated.

Additionally or alternatively, a patient may be "turned" to provide prolonged pressure relief to one side of the patient's body that is not (so heavily) in contact with the mattress. This is often done by nursing staff, and is likely to wake the patient when they are turned. It can also be a significant burden on nursing staff, who may have several patients that need frequent turning in their care.

Mattresses have been developed that cyclically rotate about a longitudinal axis of the mattress to turn a patient sleeping on the mattress. TWM254209U discloses a mattress capable of cyclically turning a patient sleeping on it. However, this mattress requires a large number of connectors and has increased width or decreased sleeping area relative to mattresses not including a turning system. TWM254209U discloses a mattress comprising a plurality of transversely disposed cells, and two longitudinal cells at the sides of the mattress at each end of the multiplicity of transverse cells. Each transverse cell comprises four chambers: an upper and a lower chamber, that each extend across the full width of the mattress (apart from the longitudinal cells down each edge of the mattress, and two intermediate, left and right chambers which each extend from one side to a centre line of the mattress. The left and right cells of a series of cells down the length of the mattress are alternately and cyclically inflated and deflated so that the patient lying on the mattress is rotated about a longitudinal axis, first down on one side, and then down on their other side.

A separate issue is concerned with the unfortunate event that sometimes a patient supported on an air mattress needs cardiopulmonary resuscitation (CPR). In this event, it is necessary to deflate the mattress or move the patient to another surface before CPR can begin, because the deformation of the inflated mattress would otherwise inhibit chest compressions required during CPR. As CPR is an urgent intervention it is clearly undesirable for there to be a significant delay while the mattress is deflated or the patient is moved. For this reason air mattresses for use in hospitals are often provided with a valve or switch that can be used to quickly deflate the mattress if the patient on it needs CPR. If a mattress includes multiple independently controlled groups of chambers then the valve or switch for deflating all of the chambers for CPR must be connected to each independently controlled group of chambers. Document EP0823248 discloses a connector for use in connecting an air-inflatable mattress to a control unit, where the connector has three modes of operation: Off; On; and CPR.

It is also sometimes necessary to transport a patient on an air mattress. In this event it is desirable to disconnect the compressor from the mattress without deflating the mattress, as the compressor adds significant weight and may require an external electrical connection, making it difficult to transport.

Embodiments of the present invention aim to at least partially mitigate the problems described above.

### BRIEF SUMMARY OF THE DISCLOSURE

In accordance with the present invention there is provided an air mattress system comprising a mattress having a longitudinal axis and a support surface on which to receive a patient, the mattress comprising:
a. a plurality of transverse cells arranged generally parallel to one another in a side-by-side arrangement transversely of said longitudinal axis and forming said support surface, wherein each cell has:
   i. an upper chamber extending a full width across the mattress;
   ii. first and second turning chambers connected under and to said upper chamber and to each other substantially at said longitudinal axis;
   iii. an aperture formed between said upper chamber and each turning chamber remote from said longitudinal axis; and
b. two longitudinal cells, each received through a plurality of aligned ones of said apertures, thereby connecting together adjacent ones of said transverse cells,
wherein said transverse cells are divided into a plurality of groups, the cells of each group being interleaved with the cells of the other group or groups, and the upper chambers of each cell being in fluid communication with all of the upper chambers of the other cells in the same group, and not in fluid communication with the upper chambers of the cells in the other group or groups and not in fluid communication with the turning chambers or the longitudinal cells,
a compressor, a plurality of valves, a control unit, a housing including said compressor, valves and control unit, and a connector,
wherein said control unit is configured to control said compressor and said valves to effect inflation and deflation of all of said cells, said controller being configured, in use, to maintain said longitudinal cells continuously inflated and to provide intermittent pressure relief to a patient sleeping on the mattress by doing at least one of:
a. repeatedly turning the patient by cyclically inflating and deflating said first and second turning chambers of said cells; and
b. cyclically inflating and deflating the upper chambers of said groups of transverse cells,
wherein tubing is grouped into a tubing group comprising:
a. two or more tubes of upper chamber tubing connected to respective upper chambers of the two or more groups of said transverse cells;
b. two tubes of turning chamber tubing; and
c. one tube of longitudinal cell tubing, and
wherein said connector is for said tubing group and is adapted to be disposed between said mattress cells and said housing, said connector being actuable to isolate said tubing group from said housing in two modes, a first CPR mode, in which said tubing and cells connected thereto are vented to atmosphere on actuation of the connector in said CPR mode and a second transport mode in which said tubing and cells connected thereto are sealed on actuation and separation of the connector in said transport mode.

The invention also provides a connector for an air mattress having multiple chambers requiring independent supply and exhaustion of air from a compressor pump, the connector comprising three parts, a first part being a mattress-side plug, a second part being a pump-side plug and a third part being an intermediate socket,
wherein the mattress-side plug comprises a plurality of individual mattress-side spigots, each for connection at one end to individual mattress supply tubes for transport of air to and from said chambers, and at their other end first part seal means to seal connections with individual conduits through the intermediate socket when the mattress-side plug is releasably connected to the intermediate socket;
wherein the intermediate socket comprising a housing including said individual conduits having at one end a second part seal means to co-operate with said first part seal means and at their other end each conduit having a normally closed valve which is opened when the intermediate socket is releasably connected to the pump-side plug;
wherein the pump-side plug comprises a plurality of individual pump-side spigots, each for connection at one end to individual pump supply tubes to receive air supply from said pump, and at their other end actuation means to seal with said other end of each conduit, and to open said valves, on interconnection of said intermediate socket and the pump-side plug; and
wherein independent release means are provided in the connector to selectively permit CPR disconnection and transport disconnection of said three parts of the connector, CPR disconnection being effected by actuation of a CPR release that permits separation of the mattress-side plug and intermediate socket, whereupon air is freely permitted to exit the mattress from said mattress-side spigots, and transport disconnection being effected by actuation of a transport release that permits separation of the pump-side plug and intermediate socket, whereupon air is prevented from exiting the connector from said individual conduits by said valves closing on said transport disconnection.

The connector may further comprise a spring disposed between the mattress-side plug and the intermediate socket, wherein the spring is compressed when the mattress-side plug is connected to the intermediate socket, whereby the spring ejects the mattress-side connector from the intermediate socket when the CPR release means is actuated.

The connector may further comprise a first locking means to secure said mattress-side plug to said intermediate socket, the locking means being a first hook on one of said mattress-side plug and intermediate socket and a first recess on the other of said mattress-side plug and intermediate socket, said first hook and first recess being biased towards one another to interengage when the mattress-side plug is connected to said intermediate socket, wherein said CPR release means comprises a cam adapted to be driven between said first hook and first recess, releasing said locking means.

In an embodiment, the mattress-side plug and intermediate socket define a mattress-side longitudinal axis and the spigots of the mattress-side plug are received in mattress sleeve receptors of the mattress-side plug, which receptors are distributed around said longitudinal axis, each sleeve receptor permitting a degree of freedom of movement of the respective spigot to facilitate accurate interengagement between said first and second seal parts, said connection between the mattress-side plug and intermediate socket is effected by relative movement in the direction of said mattress-side longitudinal axis.

In an embodiment, the pump-side plug and intermediate socket define a pump-side longitudinal axis and the spigots of the pump-side plug are received in pump sleeve receptors of the pump-side plug, which receptors are distributed around said pump-side longitudinal axis, each sleeve receptor permitting a degree of freedom of movement of the respective spigot to facilitate accurate interengagement between said valve and actuation means, said connection between the pump-side plug and intermediate socket is effected by relative movement in the direction of said pump-side longitudinal axis.

Said pump-side and mattress-side longitudinal axes may be coincident with a longitudinal axis of the entire connector, or may be inclined or offset with respect to one another.

Optionally, one of said first and second seal parts comprises a mattress cup-sleeve and the other of said first and second seal parts comprises an O-ring on a mattress tube end to be received in and seal in said mattress cup-sleeve.

Optionally, one of said valve and actuation means comprises a pump cup-sleeve and the other of said valve and actuation means comprises an O-ring on a pump tube end to be received in and seal in said pump cup-sleeve.

Said valve may comprise a valve element in said conduit and a valve spring urging said valve element against a seat in said conduit, said actuation means comprising a pin adapted to engage the valve element on connection of the pump-side plug to the intermediate socket and displace the valve element from said seat.

In an embodiment, said pump cup sleeve is on said pump side spigot and said pump tube end is on said conduit, said actuation means comprising a base of the cup-sleeve.

The connector may further comprise a second locking means to secure said intermediate socket to said pump-side plug, the second locking means being a second hook on one of said pump-side plug and intermediate socket and a second recess on the other of said pump-side plug and intermediate socket, said second hook and second recess being biased towards one another to interengage when the mattress-side plug is connected to said intermediate socket, wherein said transport release means comprises a button on said second hook accessible externally of the connector to cause release of said second locking means, thereby allowing the removal of said pump-side plug from said intermediate socket.

Said valve springs in said conduits may serve to eject said pump-side plug from said intermediate socket when said transport release means is actuated to disengage said second locking means.

Between four and eight, preferably six, of said pump-side spigots, mattress-side spigots and conduits may be provided.

The mattress system defined above may incorporate such a connector.

Said first turning chambers of all the cells may be in fluid communication with each other and said second turning chambers of all the cells are in fluid communication with each other, and said first and second turning chambers may not be in fluid communication with each other and are not in fluid communication with the upper chamber of any cell and may not be in fluid communication with the longitudinal cells.

Said longitudinal cells may be in fluid communication with each other and not in fluid communication with the first and second turning chambers of any cell and not in fluid communication with the upper chamber of any cell.

In an embodiment, each chamber of the transverse cell has an independent connector for inflation and deflation of the chambers with air.

In an embodiment, said fluid communication is by connection of tubing between connectors of each chamber.

In an embodiment, said transverse cells are each constructed from two sheets of plastics material joined together by airtight welded seams around the periphery of the sheets, airtight welded seams also extending between regions of the sheets to define said upper chambers, said first and second turning chambers and said apertures, all air-sealed with respect to one another by said seams.

### BRIEF DESCRIPTION OF THE DRAWINGS

Embodiments of the invention are further described hereinafter with reference to the accompanying drawings, in which:
Figure 1 shows a cross section of a prior art mattress for cyclically turning a patient;
Figure 2 shows a cross section of a mattress for cyclically turning a patient in an embodiment of the present invention;
Figures 3a and b show an air circuit diagram for a mattress for cyclically turning a patient in an embodiment of the present invention, as well as in the prior art;
Figures 4a and b show a connector for an air mattress in an embodiment of the present invention, in perspective view and in perspective cross section along the line I-I in Figure 5b, respectively;
Figures 5a, b and c show cross sections of the connector shown in Figure 4, taken on the lines I-I in Figure 5b, II-II in Figure 5a, and III-III in Figure 5a, respectively;
Figures 6a to d are an end view, a side view, a section on the line A-A in Figure 6a, and a section on the line B-B in Figure 6b, respectively, of the connector shown in Figures 4a and b, wherein a pump side plug of the connector is shown separated from the remainder of the connector;
Figures 7a to d are an end view, a side view, a section on the line A-A in Figure 7a, and a section on the line B-B in Figure 7b, respectively, of the connector shown in Figures 4a and b, wherein a mattress side plug of the connector is shown separated from the remainder of the connector; and
Figure 8 shows a cross section similar to that in Figure 4b of a slightly modified connector in accordance with an embodiment of the invention.

### DETAILED DESCRIPTION

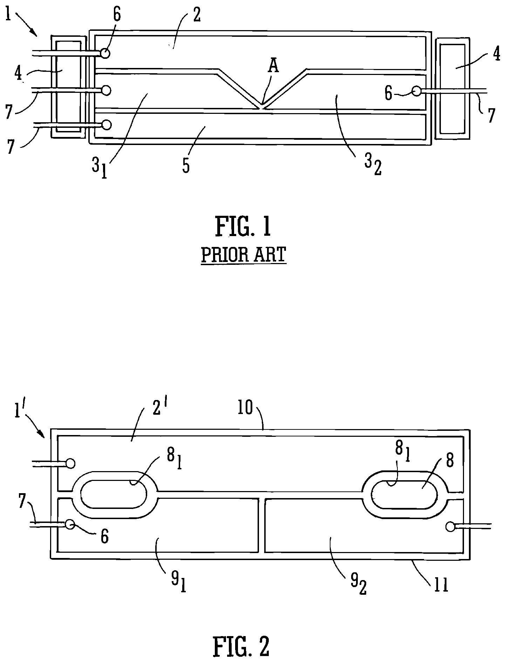

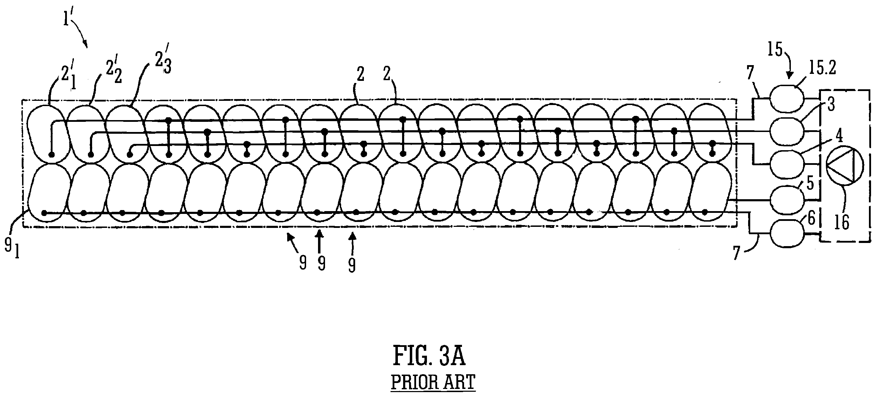

Figure 1 shows a prior art air mattress as disclosed in TWM254209U, in transverse cross section. Mattress 1 comprises a plurality of upper transverse chambers 2 having left and right turning chambers 3₁, 3₂ disposed underneath each of the upper transverse chambers. Lower transverse chambers 5 are disposed underneath each of the turning chambers and longitudinal edge chambers 4 are provided at both longitudinal edges. A compressor (not shown in Figure 1, but 16 in Figure 3a) is used to inflate the chambers via air tubes 7 which communicate with the inside of the chambers via ports 6. The air tubes 7 may be all grouped together into a bundle of six tubes. The turning chambers 3₁, 3₂ are configured to be cyclically inflated and deflated to rotate the upper transverse chambers, and therefore a patient sleeping on the mattress, about a longitudinal axis A of the mattress. Longitudinal edge cells 4 provide a barrier to prevent the patient from falling off the mattress when the upper transverse chambers are rotated by deflation of the turning chambers 3₁, 3₂ so that they are not horizontal.

The mattress shown in Figure 1 may provide an effective automatic turning system. However, the longitudinal edge cells 4 increase the overall width of the mattress. This may be inconvenient in a hospital setting because the supports used for mattresses will generally be of a standard size. Of course, upper transverse chambers 2 could be shortened to reduce the overall width of the mattress to the standard width, but this reduces the area of the mattress upon which the patient can comfortably sleep, as the upper surface of longitudinal edge chambers 4 will be discontinuous with the upper surface of upper transverse chambers 2 for at least part of the turning cycle.

The mattress shown in Figure 1 also requires a large number of connectors, as upper transverse chambers 2, lower transverse chambers 5, longitudinal edge cells 4 and each of transverse turning chambers 3₁, 3₂ all require independent control.

Figure 2 shows a transverse cross section of a mattress for cyclically turning a patient in an embodiment of the present invention. Mattress 1' includes a plurality of cells 10 arranged parallel to one another in a side-by-side arrangement. Each cell comprises an upper transverse chamber 2' and first and second (left and right) turning chambers 9₁ and 9₂ disposed underneath upper transverse chambers 2', said turning chambers each extending transversely along one half of said upper transverse chambers and attaching to the other turning chamber substantially at an axis passing longitudinally through a centre of the mattress. An aperture 8₁ is formed between each turning chamber 9₁, 9₂ and the upper transverse chamber 2' and elongate longitudinal cells 8 pass through several aligned ones of said apertures. Upper transverse chambers of the different cells 10 are divided into a plurality of groups of chambers (denoted by 2'₁, 2'₂, etc. - see Figure 3a), which groups of chambers may be cyclically inflated and deflated to provide intermittent pressure relief to a patient sleeping on the mattress. Further pressure relief may be provided by cyclically turning a patient sleeping or resting on the mattress 1', which may be achieved by cyclically inflating and deflating left and right turning chambers 9₁ and 9₂, causing the upper surface of the mattress 1' to incline about a longitudinal axis of the mattress. Elongate longitudinal cells 8 remain continuously inflated when the mattress is in use. When one of the turning chambers 9₁, 9₂ is deflated and a patient is sleeping on the mattress elongate longitudinal cells 8 advantageously increase the height of the longitudinal edge of the mattress on the side of the mattress on which the turning chamber is deflated. This reduces the probability of a patient rolling off the mattress as a result of the deflation of the turning chambers 9₁, 9₂ on one side of the mattress 1'

When the mattress shown in Figure 2 is configured to provide pressure relief by both turning the patient and cyclically inflating and deflating the upper transverse chambers 2' it is important to ensure that the patient does not contact the bottom surface of the mattress 11 when both an upper transverse chamber 2' and one of turning cells 9 are deflated, as this will be uncomfortable. Under these circumstances elongate longitudinal cells 8 also prevent the top surface of the mattress 1' from coming into contact with a bottom surface 11 of the mattress.

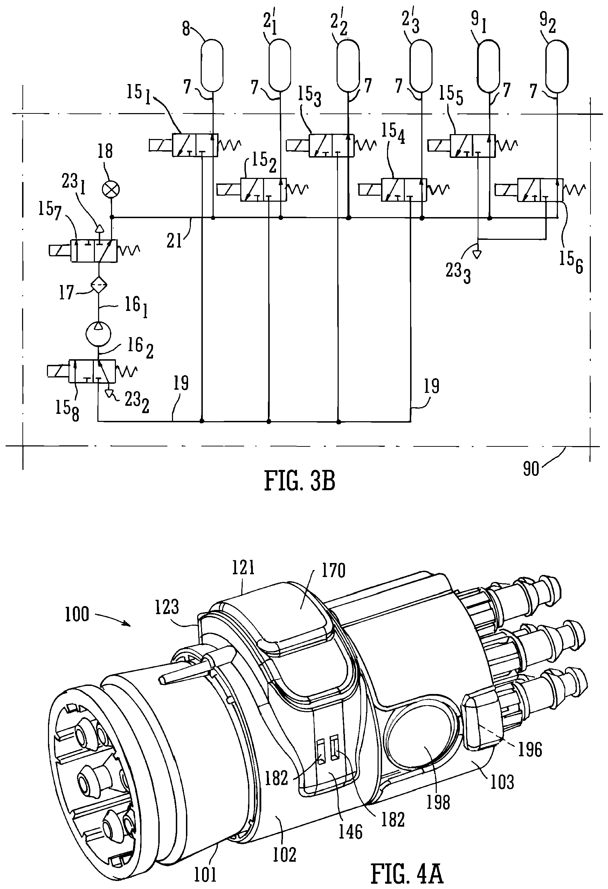

Figures 3a and b show an exemplary air circuit 90 for use with an alternating pressure mattress as shown in Figure 2, whose cells/chambers are shown at 8, 2'₁ to 2'₃ and 9₁ and 9₂. Compressor 16 and valves 15 (15₁-15₈) are controlled by a control unit (not shown) in communication with pressure sensor 18 to control the inflation and deflation of cells 8 and chambers 2'₁-2'₃, 9₁, 9₂ of cells 10. Valves 15 are controlled by the control unit (not shown) to connect or disconnect the chambers/cells from different tubes 7 supplying the cells 8,10.

Referring to Figure 3b, first of all, valve 15₇ either connects line 21 with an outlet 16₁ of the compressor 16, or vents the compressor to atmosphere at 23₁. In the latter position, line 21 is sealed, so that any and all chambers/cells connected to line 21 are at the same pressure, as determined by gauge 18. Indeed, it is gauge 18 that ultimately controls valve 15₇.

For example, valve 15₂ is configured to selectively connect group of chambers 2'₁ either to a supply tube 21 (which communicates with the outlet 16₁ of a compressor 16, via valve 15₇), or a supply tube 19 (which communicates with the inlet 16₂ of compressor 16. In Figure 3, the condition of line 19 depends on valve 15₈, which either connects line 19 to the inlet 16₂ of the compressor, or seals it. When it is sealed, as shown in Figure 3, inlet 16₂ is connected to atmosphere at 23₂.

The control unit is configured first to inflate all of the chambers/cells so that the mattress is ready for use. This is done by connecting all groups of chambers to compressor 16 via valves 15₁-15₇ and then activating the compressor, the compressor drawing air from atmosphere at 23₂, until a predetermined pressure is reached, as determined by pressure sensor 18. Valve 15₇ is then moved to its second position to seal the chambers/cells and the compressor is deactivated. All the cells/chambers are currently connected to line 21 and therefore have the same pressures

Once the mattress is ready for use the control unit is configured to control the inflation and deflation of the chambers to provide pressure relief to a patient sleeping on the mattress. Pressure relief may be provided by cyclically turning the patient by cyclically inflating and deflating turning cells 9₁ and 9₂, and/or by cyclically inflating and deflating groups of chambers 2'₁, 2'₂, 2'₃. The control unit preferably gives the user the option to select between modes in which pressure relief is provided by turning only, cyclic inflation and deflation of groups of chambers 2'₁, 2'₂, 2'₃ and a combination of both methods of pressure relief. The control unit may also have a setting in which no pressure relief is provided and all of the chambers remain continuously inflated.

If pressure relief is to be provided, then firstly all the valves 15₁ to 15₄ are moved to their second positions in which they are connected to line 19, which at this time is sealed closed by valve 15₈. Then, if cyclical turning of the patient is to be achieved, one of turning chambers 9₁ and 9₂ is vented to atmosphere at 23₃ via valve 15₅ or 15₆. This causes a reduction in support on the side of the mattress that the deflated chambers are on, and therefore causes the patient to turn towards the side of the deflated cell. After a predetermined time delay the controller switches the valve back to reconnect the chamber to the outlet of compressor 16 (when valve 15₇ is also switched) and then activates the compressor to reinflate the deflated chamber. Once the chamber reaches a predetermined pressure, as determined by pressure sensor 18, the valve 15₇ disconnects the chamber from the compressor and the compressor is deactivated. After another predetermined time delay (perhaps of zero time) the one of turning chambers 9₁, 9₂ that was not previously deflated is now deflated, and subsequently re-inflated, by the corresponding procedure and actuation of the other valve 15₅ or 15₆, as the case may be. The entire turning procedure can be repeated cyclically, either for a predetermined length of time or until the controller receives an external signal to stop.

If pressure relief is to be provided by cyclically deflating groups of chambers 2'₁-2'₃ then, firstly, at least valves 15₁-15₄ are operated to connect line 21 to cells 8 and chambers 2 of the cells 10 (if there is no turning cycle involved, then valves 15₅ and 15₆ may also both be connected to line 21 at this point). This connection has the effect of ensuring that all cells connected to line 21 are all at the same pressure and, if they are not at the correct pressure, compressor 16 is actuated to return line 21 to thatpressure before line 21 is isolated from the compressor by actuation of valve 15₇. Then, one of the groups of chambers 2'₁ to 2'₃ is deflated by connecting its valve (one of valves15₂ to 15₄) to line 19, which is then connected to the inlet of compressor 16 by actuation of valve 15₈. The compressor is then activated, with its output being vented to atmosphere at 23₁. It is to be observed that operation of valves 15₇ and 15₈ do not in this respect need to be sequential - their operation can overlap. In any event, deflation of the respective cell 2'₁ to 2'₃ thereby provides pressure relief to the area of the patient that was previously supported by the chambers being deflated. After a predetermined time delay the deflated group of chambers is re-inflated by connecting the chambers to line 21, operating valve 15₇ to connect line 21 to the outlet 16₁ of compressor 16, operating valve 15₈ to disconnect line 19 from the inlet 16₂ of compressor 16 and connect it instead to atmosphere 23₂, and activating the compressor. Once a predetermined pressure is reached in line 21, as determined by pressure sensor 18, the valve 15₇ seals the group of chambers and the compressor is deactivated.

After a further predetermined time delay each of the other of the groups of chambers 2'₁ to 2'₃ is deflated and then re-inflated in the same way. Once all of the groups of chambers 2'₁ to 2'₃ have been deflated and then re-inflated then the entire procedure is repeated cyclically, either for a predetermined time or until the controller receives an external signal to stop.

It may be that deflation of one group of chambers (eg chambers 2'₂) is desired to commence immediately after the inflation of the preceding chamber group (eg chambers 2'₁). In this event, rather than stop the compressor and cyclically actuating valves 15₇ and 15₈, those valves are left in position (connecting the compressor to lines 19 and 21) and the compressor is permanently activated. Then, it is only the valves 15₂ to 15₄ that are cyclically operated, so that the air withdrawn by the compressor 16 from one group (eg chambers 2'₁ connected to line 19 by valve 15₁) is merely recycled to the next group (eg chambers 2'₂ connected to line 21 by valve 15₂), with valves 15₇ and 15₈ only periodically being operated, either to vent overall system pressure (by operation of valve 15₇) or build system pressure (by operation of valve 15₈), as determined by sensor 18.

A filter 17 is provided at the outlet 16₁ of the compressor to damp away any highfrequency pulsations that are introduced by compressor and that might otherwise cause the patient discomfort. It also dries air introduced or recycled in the system.

Although the invention has been described in relation to an embodiment in which upper transverse chambers 2' are divided into 3 groups (i.e. 2'₁, 2'₂ and 2'₃), it will be understood that upper transverse chambers 2' could be divided into more or fewer groups. Additionally, a further group of upper transverse chambers may be in fluid communication with elongate longitudinal cells 8 and may by controlled by the same valve 15₁ as elongate longitudinal cells 8. In this embodiment the further group of cells remains continuously inflated when the mattress is in use. The further group of chambers may advantageously be located at an end of the mattress where the patient's head is likely to rest, thereby providing a constant support for the patient's head when cyclic inflation and deflation of the upper transverse chambers is performed.

Although chambers 2'₁ to 2'₃ are deflated by connecting the chambers to the inlet of the compressor and chambers 9₁, 9₂ are deflated by allowing the air to vent to atmospheric pressure in the embodiment described above, it should be noted that any method of deflation could be used for any of the chambers. The embodiment described above is simply one non-limiting example.

The valves and the pump are preferably electrically actuated, and the control unit preferably includes a processor disposed on a printed circuit board that is in electrical communication with the valves and the pump. The control unit is preferably provided with software adapted to control the cyclic inflation and deflation of the chambers.

Although not shown in the drawing, the air circuit 90 in Figure 3 is preferably included all in one compartment or housing (not shown) that includes the control unit (not shown). The group of tubing 7 (six tubes in this embodiment), from the mattress thus enters the housing, which typically may be hung at the end of a bed for convenient operation by staff. Preferably the system further comprises a CPR valve or switch (not shown in Figures 3a or b, but see below for further description of a suitable form) which can be actuated to quickly deflate all of the cells in the event that the patient needs CPR. Such a valve or switch is preferably in communication with the control unit, and the control unit is preferably configured to stop the cycle of inflating and deflating the cells once the CPR valve or switch is actuated. Alternatively the CPR valve or switch may disconnect the cells from the rest of the air circuit, so that it is impossible for the compressor to re-inflate the cells until the CPR valve or switch is reconnected. The cells are preferably deflated within 30 seconds of the CPR valve or switch being activated, more preferably within 15 seconds of the CPR valve or switch being activated.

In Figure 3b, valves 15 are shown at spatially disparate locations. However, it will be understood that this is simply for convenience of illustration, and that the valves may be located anywhere along the length of the supply tubes 7 that they connect. Indeed, in one embodiment all of the valves are located in a common manifold which is connected to compressor 16. Such a manifold may, as mentioned above, advantageously be located within a housing, which housing may also contain the compressor 16 and the control unit. A display and controls may be located on the outer surface of the housing and a plurality or group of supply tubes 7 for connecting to mattress chambers/cells, or connectors for attaching such tubes, may enter the housing.

It will be understood that mattresses produced in accordance with the present invention will typically be sized to accommodate an average-sized adult, and the expected position of a patient's head may be determined based on the location at which an adult of approximately average height would be expected to rest their head on the mattress. However, embodiments are also possible in which the mattress is sized to accommodate patients of greater or less than average height, and in these embodiments the expected position of the patient's head may be determined based on the position at which the intended patient would be likely to rest their head.

The mattress described above requires several independent connections between the compressor and the mattress chambers. Accordingly several tubes 7 are required to make the necessary connections, indeed, six of them in the present embodiment. This may make it difficult to disconnect the mattress from the pump, which may be required either to transport the patient without deflating the mattress or because CPR is required and the mattress must be urgently deflated.

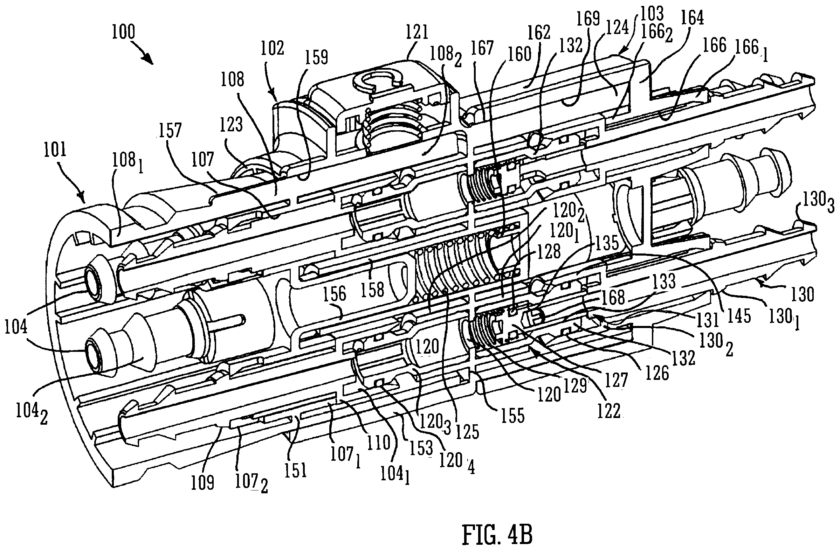

Figures 4 to 7 show a connector 100 in an embodiment of the present invention which may be used in conjunction with the mattress described above to facilitate connection and disconnection of the mattress from the pump, both when quick deflation is required and when the mattress is to be transported without being deflated. The connector is configured to connect a plurality of supply tubes 7 (not shown in Figures 4 to 7) in fluid communication with the pump or compressor 16 to supply tubes in fluid communication with an air mattress. The connector 100 comprises a mattress-side plug 101, a pump side plug 103 and an intermediate socket 102, defining a longitudinal axis 110a of the connector.

Figures 4b-7 show cross sectional views of the connector shown in Figure 4a. Referring especially to Figure 4b, mattress-side plug 101 comprises a tubular housing component 108 having mattress end 108₁ and pump end 108₂, with a dividing wall 151 in which is formed a plurality of sleeve receptors 107. In each receptor 107 is slidingly disposed individual mattress-side spigots 104. Mattress-side spigots 104 are held within the receptors 107 in housing component 108 by flanges 109,110 on the spigots that limit their axial movement. The spigots 104 are inserted from the end 107₁ of the receptors 107 and flange 109 spreads fingers of the end 107₂, which snap behind flange 109 once the spigot is fully inserted to retain the spigot therein. Valve surface or seats (here a cup sleeve) 104₁, forming first part seal means, are disposed inside at one end of the spigots 104, and barbed tube receptors 104₂ at the other end. Tubes 7, such as silicone rubber tubes from the mattress, can be slid onto spigot ends 104₂ and seal therewith and be retained thereon.

A central pilot pin 156 extends from the dividing wall 151, and is adapted to engage a corresponding central receptor 158 in the intermediate socket 102, to guide their interengagement radially. An axially extending angular fixing rib 157 is disposed on the outer surface of the plug 101, and is adapted to engage a corresponding axial groove 159 in the intermediate socket 102, to guide their interengagement angularly.

Intermediate socket 102 comprises a tubular body 153 having first and second ends 123,124 configured to receive the mattress-side plug 101 and the pump-side plug 103, respectively, a dividing wall 155 being formed to define and separate the sockets that receive plugs 101,103. A plurality of conduits 120 extend through dividing wall 155.

On the mattress side of dividing wall 155, each conduit part 120₂ receives a fixed valve member 120₃ (mattress tube end), forming second part seal means, provided with an O-ring seal element 120₄ which is adapted to engage and seal in cup sleeve 104₁ of the spigots 104. The valve member 120₃ may be glued or screwed, but is, in any event, sealed, in conduit part 120₂.

The central pilot sleeve 158, extending from the dividing wall 155, and sized to receive and locate the pilot pin 156 when the plug 101 is engaged with the socket 102, carries a spring 125. The spring is received and fixed on locator 160 at the base of sleeve 158. It is configured to engage the mattress-side plug 101 (specifically, pilot pin 156 thereof) and eject the plug from the socket when a first locking means (described further below) is disengaged by actuation of a CPR button 121. However, when plug 101 is held in engagement with the socket 102 by the lock, several conditions exist:
- the pin 156 slides in the sleeve 158 and locates the plug 101 in accurate alignment with the socket 102 (as does the interengagement of tubular bodies 108,153, and rib/groove engagement 157/159;
- the pin compresses spring 125, readying the connector for emergency ejection; and
- each spigot 104 has a sealed connection with the bore 120 of the intermediate socket 102, each spigot 104 having a certain freedom of movement so that cup sleeve 104₁ can precisely engage with valve member 120₃ to ensure the seal between them.

On the pump side of dividing wall 155 of the intermediate socket 102, valves 122 are fixed and sealed in the ends 120₁ of the conduits 120, in a similar way to the valve members 120₃. These may be fixed by any convenient means such as gluing or welding, or even screwing if appropriate threads are provided. Normally closed valves 122 comprise a valve housing 132 (pump tube end), having closing member 127 disposed within a bore 133 in valve housing 132. A spring 129 urges the closing member 127 against seat 135 in the bore 133, against which an 'O' ring 128 on the closing member 127 can seat to seal the valve and prevent the passage of fluid through valve 122.

Pump-side plug 103 comprises a tubular body 162 having an end wall 164 including a plurality of sleeve receptors 166. In each of these is disposed a pump-side spigot 130 having flanges 130₁, 130₂ at each end, similar to spigots 104, that serve to retain the spigots in the sleeve receptors 166. Like receptors 107, receptors 166 have resilient fingers 166₁ which snap into engagement behind flange 130₁. Indeed, like the spigots 104, the spigots 130 could be integrally formed on the plug 103. However, being separate parts and providing the spigots with a small degree of freedom of movement in the receptors 166 enables a more secure seal with conduits 120, as described further below. Like spigots 104, spigots 130 are shaped at their ends 130₃ to receive silicone or like resilient tubing for connection to the valves of the air circuit 90 described above.

Inside the plug 103, spigots 130 comprise actuation means having engaging element 131 and a valve seat recess 145. The valve seat recess (cup-sleeve) is adapted to engage with valve housing 132 and an 'O' ring 126 seals between the two. This is why some freedom of movement is provided to the spigot 130 in the plug 103, so that greater tolerance can be accommodated in the dimensions of the intermediate socket 102 and plug 103. At the same time, when plug 103 is engaged with intermediate socket 102, engaging element 131 serves to lift valve closing member 127 off its seat 135 in the valve housing 132 against the force of return spring 129 and fluid in the conduit 120 can flow around the 'O' ring 128, enter windows 168 in valve closing member 127 and gain access to the bore of the spigot 130.

As with the engagement between plug 101 and intermediate socket 102, plug body 162 of the pump side plug 103 has a groove 169 to receive axial rib 167 on the body 124 of intermediate socket 102. This ensures correct angular interconnection and ensures that each tube 7 connected to a spigot 130 on the pump side plug 103 connects to the correct tube 7 on corresponding spigot 104 of the mattress side plug 101.

In Figures 4-7 the connector 100 is shown in its assembled state, with mattress-side plug 101 and pump-side plug 103 inserted into the first and second ends, respectively, of intermediate connector 102. When the connector is assembled each of the mattress-side spigots 104 contacts a respective one of the conduits 120 at a first end of the conduit, and each of the pump-side spigots engages a respective one of normally closed valves 122 to open the valve. In this way each pump-side spigot is in fluid communication with a respective one of the mattress-side spigots. The fluid paths between spigots 104, conduits 120 and spigots 130 are sealed by 'O' rings 126 and 120₄.

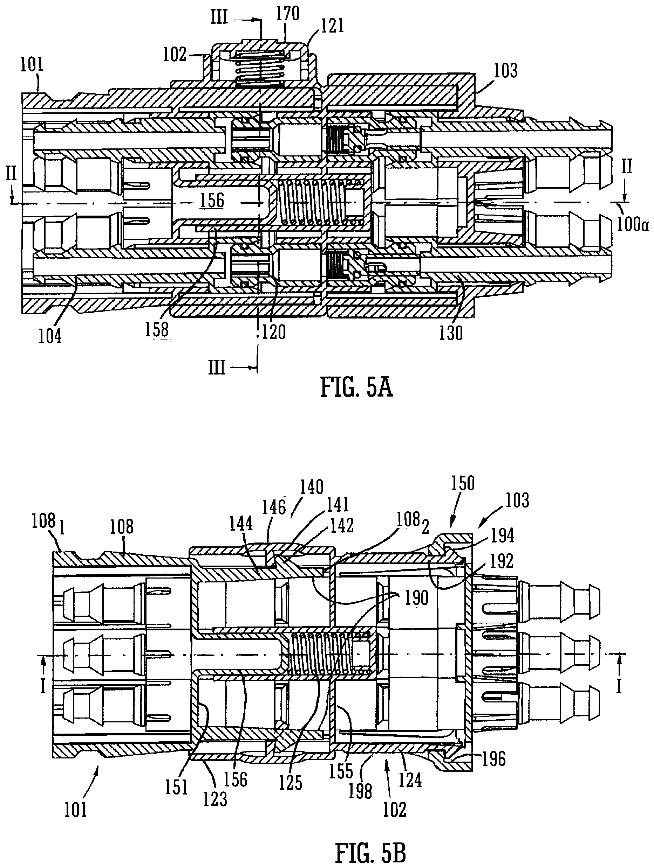

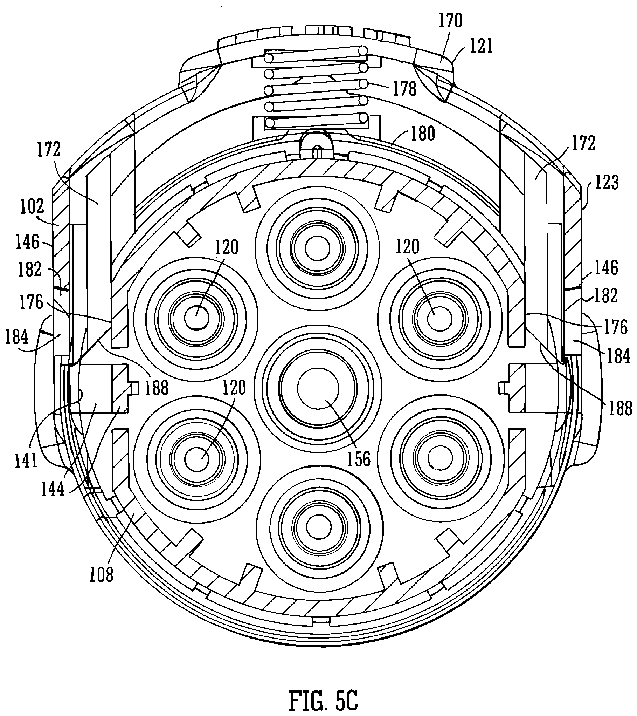

With reference to Figure 5b, when mattress-side plug 101 is inserted into intermediate socket 102, the mattress-side plug is held in place (against being ejected by spring 125) within intermediate socket 102 by a first locking means 140. This comprises a hook 142 on a tab 144 of pump end 108₂, of the body 108 of the mattress plug 101. The hook 142 engages a first recess 141 in a side wall 146 of intermediate socket 102, as shown in Figure 5b.

Disengagement or CPR button 121 is received in an upstanding flange 123 formed on the socket 102 and is configured to quickly release mattress-side plug 101 from intermediate socket 102 when depressed. The button 121 comprises a cap 170 and depending arms 172 on either side. The arms slide linearly between straight sections of the side 146 of the intermediate socket 102 and a side 176 of the body 108 of the mattress side plug 101. A spring 178 is disposed between the cap 170 and a top wall 180 of the socket 102 and biases the button upwardly in the drawings. Hooks 182 off cantilevered tabs of the arms 172 engage in small windows 184 in the socket 102 and retain the button within the flange 123 preventing it from being ejected therefrom. However, the windows do not prevent the button 121 from being depressed. The arms 172 have a cam front edge 188, which cams are adapted to slide outside extensions 190 of the tabs 144 pressing then inwardly as the button is depressed and the extensions ride up the cams 188. This proceeds until hooks 142 are released from catches 141 whereupon spring 125 ejects the plug 101 from the intermediate socket 102. On doing so, spigots 104, or rather their seats 104₁, are withdrawn from around valve members 120₃ of the conduits 120 so that any pressure in the spigots 104, and tubing 7 and mattress chambers 8, 2 and 9 connected thereto, is instantly permitted to release.

This quickly deflates all of the chambers of the air mattress connected to mattress-side spigots 104. Disengagement button 121 is therefore particularly useful if the air mattress needs to be urgently deflated, for example if a patient lying on the mattress needs CPR.

As also shown in Figure 5b, pump-side plug 103 is held in place within intermediate socket 102 by a second locking means 150 disposed on intermediate socket 102. Locking means 150 comprises tabs 192 having hooks 194, which engage second recesses 196 when pump-side plug 103 is inserted into intermediate socket 102. A user may remove pump-side plug 103 from intermediate socket 102 by pressing buttons 198 on either side of intermediate socket 102. This disengages second locking means 150 by releasing hooks 194 from second recesses 196, allowing the user to remove pump-side plug 103 from intermediate socket 102. When pump-side plug 103 is removed from intermediate socket 102, valves 122 close, sealing the ends of conduits 120. This allows the user to disconnect the mattress from pump unit the without causing the mattress to deflate. This enables a patient on the mattress to be relocated using the mattress as a stretcher and without having to also move at the same time the pump unit. Second locking means 150 are also referred to as transport disconnection means.

It will be evident to the person skilled in the art that the tabs and hooks and recesses of the first and second locking means could be inverted or swapped, without any loss of functionality. That is, the tabs 144 and 192 could be on the intermediate socket 102 and pump side plug 103 respectively, and the corresponding recesses 141 and 196 formed on the mattress side plug 101 and intermediate socket respectively. Likewise, one, instead of both, of the locking means could be swapped in this way.

The connector described above may be suitable for use with the mattress described above. In the embodiment illustrated in Figures 4-7 the connector includes six independent passages therethrough, each passage being defined by one pump-side spigot 130, one conduit 120 and one mattress-side spigot 104. This allows connection between a pump and six independently controlled mattress chambers or groups of chambers, providing enough independent connectors to control the mattress described above. However, it will be understood that other mattresses may require more independent connections, and other embodiments of the invention may include more or fewer independent passages.

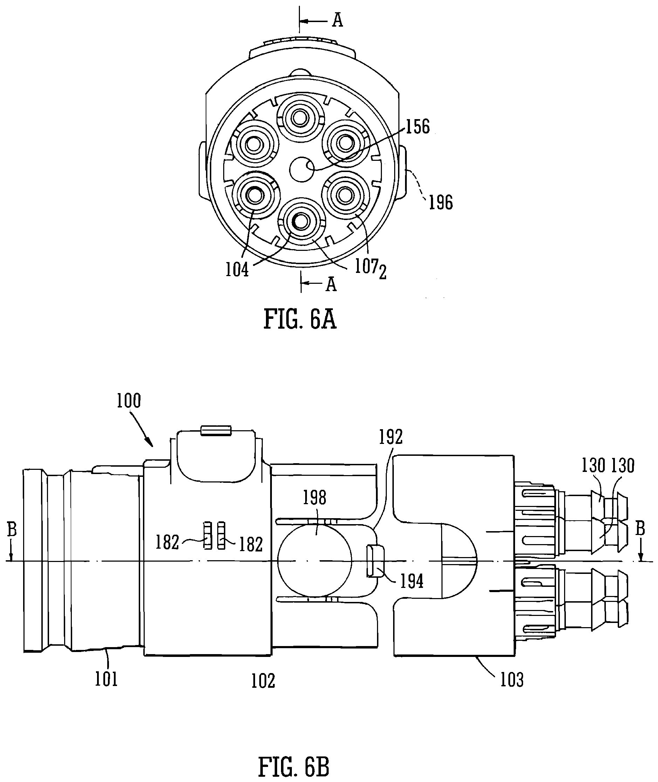

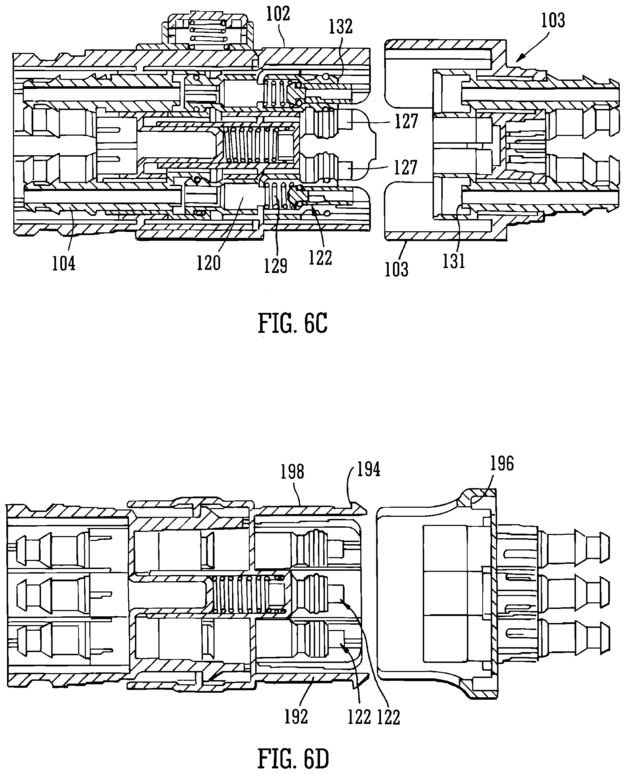

Figures 6a to d show the connector after transport disconnection, where the valves 122 are all closed having been released by the actuation elements 131. Indeed, the springs 129 collectively serve to eject the pump-side plug 103 from the socket 102 when the second locking means 150 are released, simultaneously with sealing the ends of the conduits 120.

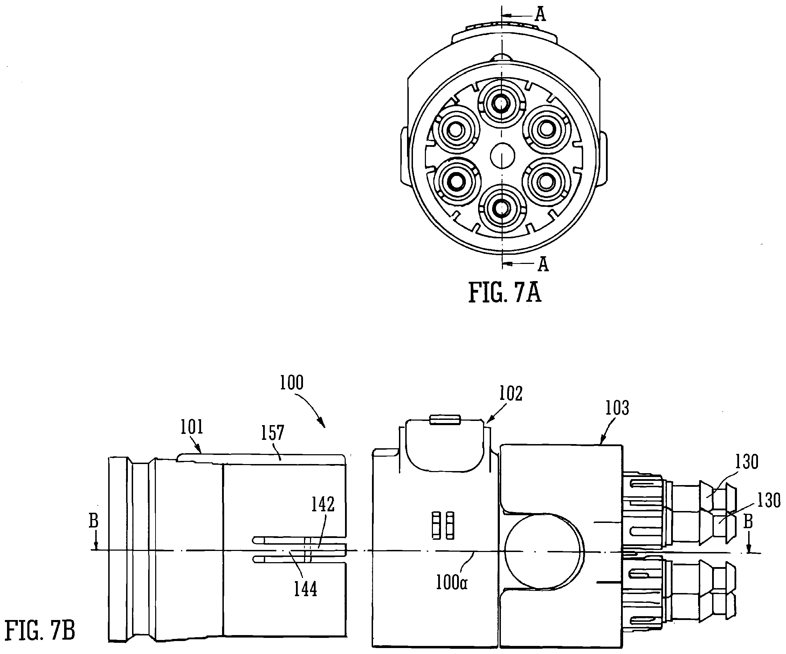

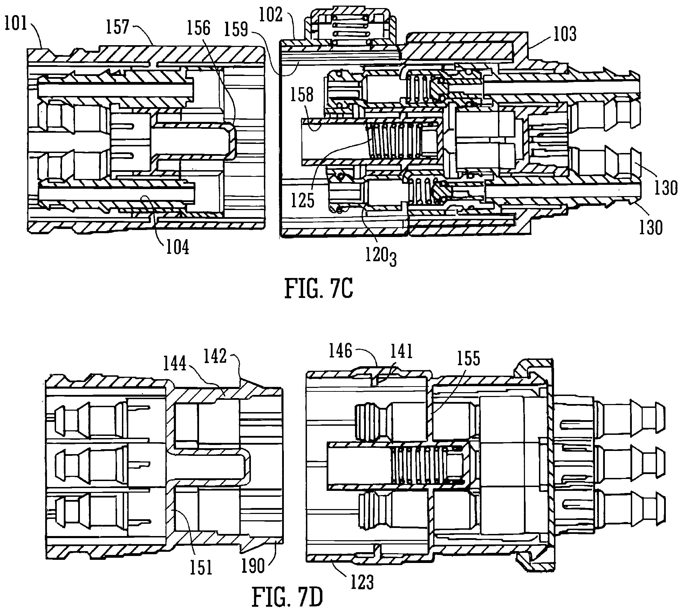

Figures 7a to d show the connector after CPR disconnection, where the spigots 104 are all open, so that deflation of the mattress cells can occur quickly and without restriction.

Although the axis 100a is common to both the interconnection between the three parts of the connector, the intermediate socket could be shaped so that a mattress-side axis of the mattress-side plug and intermediate socket was inclined and/or offset with respect to a pump-side axis of the pump-side plug and intermediate socket. There is no inherent reason why they should be coincident. With the present design, however, the spigots 104,130 are aligned with the respective parts (mattress-side and pump-side) of the longitudinal axis 100a.

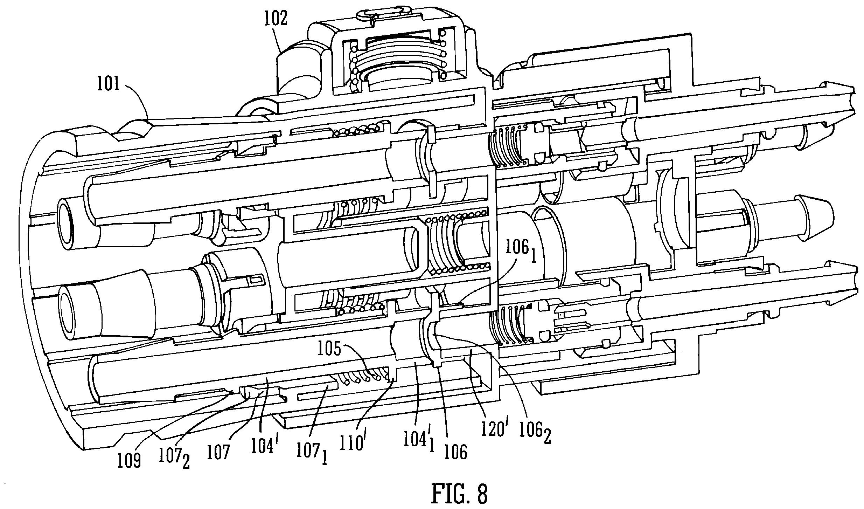

In Figure 8, a slightly modified connector 100' is shown which only differs from the embodiment described above with respect to the sealing arrangements between mattress-side spigots 104' and the conduits 120'. Here springs 105 act between flange 110 and end 107₁ of the receptors 107, and bias the axial position of spigots 104 so that flange 109 normally engages end 107₂ of the receptors 107. The spigots 104' have freedom to move along their axis in the sleeves 107 under control of the springs 105. End 104₁' of the spigots are here defined with edge valve seats, which are adapted to abut an elastomer seal plate or gasket 106. The gasket 106 is provided with sleeves 106₁, adapted to fit on and seal around conduits 120₂, and having apertures 106₂ of smaller dimension than ends 104₁ of the spigots 104. Different from the embodiment described with reference to Figure 4b, here, when the mattress side plug 101 is engaged with the intermediate socket 102, the end 104₁ of each spigot 104 is pressed against seal plate 106 around a respective one of the apertures 106₂, compressing the springs 105, but still providing a sealed connection between the bore of the spigots 104 and the conduits 120.

As used herein the word "deflation" and variations thereof means to reduce the pressure within a chamber or other pressure vessel by evacuating at least some of the air in the chamber or other pressure vessel. The word inflation means to increase the pressure in a chamber or other pressure vessel by inserting additional air into the chamber or other pressure vessel.

As used herein the words "upper", "lower", "underneath", "on top of' and variations thereof refer to the position of components when the mattress is disposed on a support in the orientation that it is intended to have in use.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

## Claims

1. A mattress system comprising:
A. an air mattress (1') having a longitudinal axis and a support surface on which to receive a patient, the mattress comprising:
a. a plurality of transverse cells (10) arranged generally parallel to one another in a side-by-side arrangement transversely of said longitudinal axis and forming said support surface, wherein each cell has:
i. an upper chamber (2') extending a full width across the mattress;
ii. first and second turning chambers (9₁, 9₂) connected under and to said upper chamber and to each other substantially at said longitudinal axis;
iii. an aperture (8₁) formed between said upper chamber and each turning chamber remote from said longitudinal axis; and
b. two longitudinal cells (8), each received through a plurality of aligned ones of said apertures, thereby connecting together adjacent ones of said transverse cells,
wherein said transverse cells (10) are divided into a plurality of groups, the cells of each group being interleaved with the cells of the other group or groups, and the upper chambers of each cell being in fluid communication with all of the upper chambers of the other cells in the same group, and not in fluid communication with the upper chambers of the cells in the other group or groups and not in fluid communication with the turning chambers or the longitudinal cells,
B. a compressor (16),
C. a plurality of valves (15),
D. a control unit,
E. a housing including said compressor, valves and control unit, and
F. a connector,
wherein said control unit is configured to control said compressor and said valves to effect inflation and deflation of all of said cells, said controller being configured, in use, to maintain said longitudinal cells continuously inflated and to provide intermittent pressure relief to a patient sleeping on the mattress by doing at least one of:
a. repeatedly turning the patient by cyclically inflating and deflating said first and second turning chambers (9₁, 9₂) of said cells; and
b. cyclically inflating and deflating the upper chambers (2') of said groups of transverse cells,
wherein tubing (7) is grouped into a tubing group comprising:
a. two or more tubes of upper chamber tubing connected to respective upper chambers (2') of the two or more groups of said transverse cells;
b. two tubes of turning chamber (9₁, 9₂) tubing; and
c. one tube of longitudinal cell (8) tubing, and
wherein said connector is for said tubing group and is adapted to be disposed between said mattress cells and said housing, said connector being actuable to isolate said tubing group from said housing in two modes, a first CPR mode, in which said tubing and cells connected thereto are vented to atmosphere on actuation of the connector in said CPR mode and a second transport mode in which said tubing and cells connected thereto are sealed on actuation and separation of the connector in said transport mode.

2. A connector (100), for an air mattress having multiple chambers requiring independent supply and exhaustion of air from a compressor pump, the connector comprising three parts, a first part being a mattress-side plug (101), a second part being a pump-side plug (103) and a third part being an intermediate socket (102),
wherein the mattress-side plug comprises a plurality of individual mattress-side spigots (104), each for connection at one end to individual mattress supply tubes for transport of air to and from said chambers, and at their other end first part seal means (104₁) to seal connections with individual conduits through the intermediate socket when the mattress-side plug is releasably connected to the intermediate socket;
wherein the intermediate socket comprising a housing (153) including said individual conduits (120) having at one end a second part seal means to co-operate with said first part seal means and at their other end each conduit having a normally closed valve (122) which is opened when the intermediate socket is releasably connected to the pump-side plug;
wherein the pump-side plug comprises a plurality of individual pump-side spigots (130), each for connection at one end to individual pump supply tubes to receive air supply from said pump, and at their other end actuation means to seal with said other end of each conduit, and to open said valves, on interconnection of said intermediate socket and the pump-side plug; and
wherein independent release means are provided in the connector to selectively permit CPR disconnection and transport disconnection of said three parts of the connector, CPR disconnection being effected by actuation of a CPR release (121) that permits separation of the mattress-side plug and intermediate socket, whereupon air is freely permitted to exit the mattress (1') from said mattress-side spigots, and transport disconnection being effected by actuation of a transport release (198) that permits separation of the pump-side plug and intermediate socket, whereupon air is prevented from exiting the connector from said individual conduits by said valves closing on said transport disconnection.

3. A connector (100) as claimed in claim 2, further comprising a spring (125) disposed between the mattress-side plug and the intermediate socket, wherein the spring is compressed when the mattress-side plug is connected to the intermediate socket, whereby the spring ejects the mattress-side connector from the intermediate socket when the CPR release means is actuated.

4. A connector (100) as claimed in claim 2 or claim 3, further comprising a first locking means to secure said mattress-side plug to said intermediate socket, the locking means being a first hook (142) on one of said mattress-side plug and intermediate socket and a first recess (141) on the other of said mattress-side plug and intermediate socket, said first hook and first recess being biased towards one another to interengage when the mattress-side plug is connected to said intermediate socket, wherein said CPR release means comprises a cam (188) adapted to be driven between said first hook and first recess, releasing said locking means.

5. A connector (100) as claimed in any of claims 2 to 4, wherein the mattress-side plug (101) and intermediate socket (102) define a mattress-side longitudinal axis and the spigots of the mattress-side plug are received in mattress sleeve receptors (107) of the mattress-side plug, which receptors are distributed around said longitudinal axis, each sleeve receptor permitting a degree of freedom of movement of the respective spigot to facilitate accurate interengagement between said first and second seal parts, said connection between the mattress-side plug and intermediate socket is effected by relative movement in the direction of said mattress-side longitudinal axis,
optionally wherein one of said first and second seal parts comprises a mattress cup-sleeve (104₁) and the other of said first and second seal parts comprises an O-ring (120₄) on a mattress tube end to be received in and seal in said mattress cup-sleeve.

6. A connector (100) as claimed in any of claims 2 to 5, wherein said valve (122) comprises a valve element (127) in said conduit and a valve spring (129) urging said valve element against a seat in said conduit, said actuation means comprising a pin adapted to engage the valve element on connection of the pump-side plug to the intermediate socket and displace the valve element from said seat.

7. A connector (100) as claimed in any of claims 2 to 6, further comprising a second locking means to secure said intermediate socket to said pump-side plug, the second locking means being a second hook (194) on one of said pump-side plug and intermediate socket and a second recess (196) on the other of said pump-side plug and intermediate socket, said second hook and second recess being biased towards one another to interengage when the mattress-side plug is connected to said intermediate socket, wherein said transport release means comprises a button (198) on said second hook accessible externally of the connector to cause release of said second locking means, thereby allowing the removal of said pump-side plug from said intermediate socket.

8. A mattress system as claimed in claim 1, wherein said connector is a connector as claimed in any of claims 2 to 7.

9. A mattress system as claimed in claim 1 or 8, wherein said first turning chambers of all the cells are in fluid communication with each other and said second turning chambers of all the cells are in fluid communication with each other, and said first and second turning chambers are not in fluid communication with each other and are not in fluid communication with the upper chamber of any cell and are not in fluid communication with the longitudinal cells.

10. A mattress system as claimed in claim 1, 8 or 9 in which said longitudinal cells (8) are in fluid communication with each other and are not in fluid communication with the first and second turning chambers of any cell and are not in fluid communication with the upper chamber of any cell.

11. A mattress (1') as claimed in claim 1, 8, 9 or 10, wherein each chamber of the transverse cell has an independent connector for inflation and deflation of the chambers with air,
optionally wherein said fluid communication is by connection of said tubing (7) between connectors of each chamber.

12. A mattress system as claimed in claim 1 or any of claims 8 to 11, wherein said transverse cells (10) are each constructed from two sheets of plastics material joined together by airtight welded seams around the periphery of the sheets, airtight welded seams also extending between regions of the sheets to define said upper chambers (2'), said first and second turning chambers (9₁, 9₂) and said apertures, all air-sealed with respect to one another by said seams.

## Patentansprüche

1. Matratzensystem, umfassend:
A. eine Luftmatratze (1'), die eine Längsachse und eine Stützfläche, auf der ein
Patient aufgenommen wird, aufweist, wobei die Matratze Folgendes umfasst:
a. eine Vielzahl von Querzellen (10), die im Allgemeinen parallel zueinander in einer Seite-an-Seite-Anordnung quer zu der Längsachse angeordnet sind und die Stützfläche bilden, wobei jede Zelle Folgendes aufweist:
i. eine obere Kammer (2'), die sich über eine vollständige Breite quer über die Matratze erstreckt;
ii. erste und zweite Wendekammern (9₁, 9₂), die im Wesentlichen auf der Längsachse unter und mit der oberen Kammer und miteinander verbunden sind;
iii. eine Öffnung (8₁), die zwischen der oberen Kammer und jeder Wendekammer entfernt zu der Längsachse gebildet ist; und
b. zwei Längszellen (8), wobei jede durch eine Vielzahl von ausgerichteten der Öffnungen aufgenommen ist, wodurch benachbarte der Querzellen miteinander verbunden werden,
wobei die Querzellen (10) in eine Vielzahl von Gruppen geteilt sind, wobei die Zellen jeder Gruppe mit den Zellen der anderen Gruppe oder Gruppen verschachtelt sind und die oberen Kammern jeder Zelle in Fluidkommunikation mit allen der oberen Kammern der anderen Zellen in derselben Gruppe und nicht in Fluidkommunikation mit den oberen Kammern der Zellen in der/den anderen Gruppe oder Gruppen und nicht in Fluidkommunikation mit den Wendekammern oder den Längszellen sind,
B. einen Verdichter (16),
C. eine Vielzahl von Ventilen (15),
D. eine Steuereinheit,
E. ein Gehäuse, das den Verdichter, die Ventile und die Steuereinheit beinhaltet, und
F. einen Verbinder,
wobei die Steuereinheit konfiguriert ist, um den Verdichter und die Ventile zu steuern, um ein Aufblasen und Entleeren aller Zellen zu bewirken, wobei die Steuerung in Gebrauch konfiguriert ist, um die Längszellen durchgehend aufgeblasen zu halten und um einem Patienten, der auf der Matratze schläft, intermittierende Druckentlastung bereitzustellen, indem sie zumindest eines des Folgenden ausführt:
a. wiederholendes Drehen des Patienten durch zyklisches Aufblasen und Entleeren der ersten und zweiten Wendekammern (9₁, 9₂) der Zellen; und
b. zyklisches Aufblasen und Entleeren der oberen Kammern (2') der Gruppen an Querzellen,
wobei eine Verschlauchung (7) zu einer Schlauchgruppe gruppiert ist, umfassend:
a. zwei oder mehr Schläuche der Verschlauchung der oberen Kammer, die mit jeweiligen oberen Kammern (2') der zwei oder mehr Gruppen der Querzellen verbunden sind;
b. zwei Schläuche der Verschlauchung der Wendekammer (9₁, 9₂); und
c. ein Schlauch der Verschlauchung der Längszelle (8), und
wobei der Verbinder für die Schlauchgruppe ist und angepasst ist, um zwischen den Matratzenzellen und dem Gehäuse angeordnet zu werden, wobei der Verbinder betätigbar ist, um die Schlauchgruppe in zwei Modi von dem Gehäuse zu isolieren, einem ersten CPR-Modus, in dem die Verschlauchung und damit verbundenen Zellen bei Betätigung des Verbinders in dem CPR-Modus in die Atmosphäre abgelassen werden und einem zweiten Transportmodus, in dem die Verschlauchung und damit verbundenen Zellen bei Betätigung und Trennung des Verbinders in dem Transportmodus abgedichtet werden.

2. Verbinder (100) für eine Luftmatratze, die mehrere Kammern aufweist, die unabhängiges Zuführen und Ablassen von Luft aus einer Verdichterpumpe erfordern, wobei der Verbinder drei Teile umfasst, einen ersten Teil, der ein Matratzenseitenstöpsel (101) ist, einen zweiten Teil, der ein Pumpseitenstöpsel (103) ist und einen dritten Teil, der eine Zwischenmuffe (102) ist,
wobei der Matratzenseitenstöpsel eine Vielzahl von einzelnen Matratzenseitenstutzen (104) umfasst, jeweils zur Verbindung an einem Ende mit einzelnen Matratzenzufuhrschläuchen zum Transport von Luft zu und von den Kammern, und an ihrem anderen Ende erste Abdichtungsmittel (104₁) zum Abdichten von Verbindungen mit einzelnen Leitungen durch die Zwischenmuffe, wenn der Matratzenseitenstöpsel lösbar mit der Zwischenmuffe verbunden ist;
wobei die Zwischenmuffe ein Gehäuse (153) umfasst, das die einzelnen Leitungen (120) beinhaltet, die an einem Ende ein zweites Abdichtungsmittel aufweisen, um mit den ersten Abdichtungsmitteln zu kooperieren und jede Leitung an ihrem anderen Ende ein normalerweise geschlossenes Ventil (122) aufweist, das geöffnet wird, wenn die Zwischenmuffe lösbar mit dem Pumpseitenstöpsel verbunden ist;
wobei der Pumpseitenstöpsel eine Vielzahl von einzelnen Pumpseitenstutzen (130) umfasst, jeweils zur Verbindung an einem Ende mit einzelnen Pumpenzufuhrschläuchen, um Luftzufuhr von der Pumpe zu empfangen, und an ihrem anderen Ende Betätigungsmittel zum Abdichten des anderen Endes jeder Leitung und zum Öffnen der Ventile bei Verbindung der Zwischenmuffe und des Pumpseitenstöpsels; und
wobei unabhängige Freigabemittel in dem Verbinder bereitgestellt sind, um selektiv CPR-Trennung und Transporttrennung der drei Teile des Verbinders zu ermöglichen, wobei CPR-Trennung durch Betätigung einer CPR-Freigabe (121) bewirkt wird, die die Trennung des Matratzenseitenstöpsels und der Zwischenmuffe ermöglicht, woraufhin Luft aus den Matratzenseitenstutzen frei aus der Matratze (1') austreten darf und Transporttrennung durch Betätigung einer Transportfreigabe (198) bewirkt wird, die die Trennung des Pumpseitenstöpsels und der Zwischenmuffe ermöglicht, woraufhin durch die Ventile, die sich bei der Transporttrennung schließen, verhindert wird, dass Luft aus den einzelnen Leitungen aus dem Verbinder austritt.

3. Verbinder (100) nach Anspruch 2, ferner umfassend eine Feder (125), die zwischen dem Matratzenseitenstöpsel und der Zwischenmuffe angeordnet ist, wobei die Feder komprimiert wird, wenn der Matratzenseitenstöpsel mit der Zwischenmuffe verbunden ist, wodurch die Feder den Matratzenseitenverbinder aus der Zwischenmuffe ausstößt, wenn das CPR-Freigabemittel betätigt ist.

4. Verbinder (100) nach Anspruch 2 oder Anspruch 3, ferner umfassend ein erstes Verriegelungsmittel zum Befestigen des Matratzenseitenstöpsels an der Zwischenmuffe, wobei das Verriegelungsmittel ein erster Haken (142) an einem von dem Matratzenseitenstöpsel und der Zwischenmuffe und einer ersten Aussparung (141) an dem anderen von dem Matratzenseitenstöpsel und der Zwischenmuffe ist, wobei der erste Haken und die erste Aussparung in Richtung zueinander vorgespannt sind, um sich gegenseitig in Eingriff zu nehmen, wenn der Matratzenseitenstöpsel mit der Zwischenmuffe verbunden ist, wobei das CPR-Freigabemittel einen Nocken (188) umfasst, der angepasst ist, um zwischen den ersten Haken und die erste Aussparung getrieben zu werden, wodurch das Verriegelungsmittel freigegeben wird.

5. Verbinder (100) nach einem der Ansprüche 2 bis 4, wobei der Matratzenseitenstöpsel (101) und die Zwischenmuffe (102) eine Matratzenseitenlängsachse definieren und die Stutzen des Matratzenseitenstöpsels in Matratzenhüllenaufnahmen (107) des Matratzenseitenstöpsels aufgenommen sind, wobei die Aufnahmen um die Längsachse herum verteilt sind, wobei jede Hüllenaufnahme einen Bewegungsfreiheitsgrad des jeweiligen Stutzens ermöglicht, um genauen gegenseitigen Eingriff zwischen dem ersten und zweiten Abdichtungsteil zu vereinfachen, wobei die Verbindung zwischen dem Matratzenseitenstöpsel und der Zwischenmuffe durch relative Bewegung in die Richtung der Matratzenseitenlängsachse bewirkt wird,
wobei optional eines von den ersten und zweiten Abdichtungsteilen eine Matratzenschalenhülle (104₁) umfasst und das andere von den ersten und zweiten Abdichtungsteilen einen O-Ring (120₄) an einem Matratzenschlauchende zur Aufnahme und Abdichtung in der Matratzenschalenhülle umfasst.

6. Verbinder (100) nach einem der Ansprüche 2 bis 5, wobei das Ventil (122) ein Ventilelement (127) in der Leitung und eine Ventilfeder (129), die das Ventilelement gegen einen Sitz in der Leitung drängt, umfasst, wobei das Betätigungsmittel einen Stift umfasst, der angepasst ist, um das Ventilelement bei Verbindung des Pumpseitenstöpsels mit der Zwischenmuffe in Eingriff zu nehmen und das Ventilelement aus dem Sitz zu verschieben.

7. Verbinder (100) nach einem der Ansprüche 2 bis 6, ferner umfassend ein zweites Verriegelungsmittel zum Befestigen der Zwischenmuffe an dem Pumpseitenstöpsel, wobei das zweite Verriegelungsmittel ein zweiter Haken (194) an einem von dem Pumpseitenstöpsel und der Zwischenmuffe und einer zweiten Aussparung (196) an dem anderen von dem Pumpseitenstöpsel und der Zwischenmuffe ist, wobei der zweite Haken und die zweite Aussparung in Richtung zueinander vorgespannt sind, um sich gegenseitig in Eingriff zu nehmen, wenn der Matratzenseitenstöpsel mit der Zwischenmuffe verbunden ist, wobei das Transportfreigabemittel einen Knopf (198) an dem zweiten Haken umfasst, der außerhalb des Verbinders zugänglich ist, um eine Freigabe des zweiten Verriegelungsmechanismus zu bewirken, wodurch die Entfernung des Pumpseitenstöpsels von der Zwischenmuffe ermöglicht wird.

8. Matratzensystem nach Anspruch 1, wobei der Verbinder ein Verbinder nach einem der Ansprüche 2 bis 7 ist.

9. Matratzensystem nach Anspruch 1 oder 8, wobei die ersten Wendekammern aller Zellen in Fluidkommunikation miteinander sind und die zweiten Wendekammern aller Zellen in Fluidkommunikation miteinander sind und die ersten und zweiten Wendekammern nicht in Fluidkommunikation miteinander sind und nicht in Fluidkommunikation mit der oberen Kammer einer beliebigen Zelle sind und nicht in Fluidkommunikation mit den Längszellen sind.

10. Matratzensystem nach Anspruch 1, 8 oder 9, wobei die Längszellen (8) in Fluidkommunikation miteinander sind und nicht in Fluidkommunikation mit den ersten und zweiten Wendekammern einer beliebigen anderen Zelle sind und nicht in Fluidkommunikation mit den oberen Zellen einer beliebigen Zelle sind.

11. Matratze (1') nach Anspruch 1, 8, 9 oder 10, wobei jede Kammer der Querzelle einen unabhängigen Verbinder zum Aufblasen und Entleeren der Kammern mit Luft aufweist,
wobei optional die Fluidkommunikation durch Verbindung der Verschlauchung (7) zwischen Verbindern jeder Kammer erfolgt.

12. Matratzensystem nach Anspruch 1 oder einem der Ansprüche 8 bis 11, wobei die Querzellen (10) jeweils aus zwei Lagen aus Kunststoffmaterial gefertigt sind, die durch luftdichte geschweißte Nähte um den Umfang der Lagen herum miteinander verbunden sind, wobei sich luftdichte geschweißte Nähte auch zwischen Regionen der Lagen erstrecken, um die oberen Kammern (2'), die ersten und zweiten Wendekammern (9₁, 9₂) und die Öffnungen zu definieren, die durch die Näht alle luftdicht in Bezug zueinander sind.

## Revendications

1. Système de matelas comprenant :
A. un matelas pneumatique (1') possédant un axe longitudinal et une surface de support sur laquelle recevoir un patient, le matelas comprenant :
a. une pluralité de cellules transversales (10) agencées globalement parallèles les unes aux autres dans un agencement côte à côte transversalement par rapport audit axe longitudinal et formant ladite surface de support, dans lequel chaque cellule possède :
i. une chambre supérieure (2') s'étendant sur toute une largeur à travers le matelas ;
ii. des première et deuxième chambres de retournement (9₁, 9₂) connectées sous et à ladite chambre supérieure et l'une à l'autre sensiblement au niveau dudit axe longitudinal ;
iii. une ouverture (8₁) formée entre ladite chambre supérieure et chaque chambre de retournement à distance dudit axe longitudinal ; et
b. deux cellules longitudinales (8), chacune reçue à travers une pluralité de celles alignées desdites ouvertures, connectant de la sorte ensemble celles adjacentes desdites cellules transversales,
dans lequel lesdites cellules transversales (10) sont divisées en une pluralité de groupes, les cellules de chaque groupe étant entrelacées avec les cellules de l'autre groupe ou des autres groupes, et les chambres supérieures de chaque cellule étant en communication fluide avec l'ensemble des chambres supérieures des autres cellules dans le même groupe, et pas en communication fluide avec les chambres supérieures des cellules dans l'autre groupe ou les autres groupes et pas en communication fluide avec les chambres de retournement ou les cellules longitudinales,
B. un compresseur (16),
C. une pluralité de vannes (15),
D. une unité de commande,
E. un boîtier contenant lesdits compresseur, vannes et unité de commande, et
F. un connecteur,
dans lequel ladite unité de commande est configurée pour commander ledit compresseur et lesdites vannes pour effectuer le gonflage et dégonflage de l'ensemble desdites cellules, ladite unité de commande étant configurée pour, en utilisation, maintenir lesdites cellules longitudinales continuellement gonflées et pour fournir une décharge de pression intermittente à un patient dormant sur le matelas en procédant au moins à l'une action parmi :
a. le retournement répété du patient en dégonflant et gonflant de manière cyclique lesdites première et deuxième chambres de retournement (9₁, 9₂) desdites cellules ; et
b. le gonflage et dégonflage de manière cyclique des chambres supérieures (2') desdits groupes de cellules transversales,
dans lequel un tubage (7) est groupé dans un groupe de tubage comprenant :
a. deux tubes ou plus de tubage de chambre supérieure connectés aux chambres supérieures respectives (2') des deux groupes ou plus desdites cellules transversales ;
b. deux tubes de tubage de chambres de retournement (9₁, 9₂) ; et
c. un tube de tubage de cellule longitudinale (8), et
dans lequel ledit connecteur est pour ledit groupe de tubage et est adapté pour être disposé entre lesdites cellules de matelas et ledit boîtier, ledit connecteur étant actionnable pour isoler ledit groupe de tubage dudit boîtier dans deux modes, un premier mode CPR, dans lequel ledit tubage et les cellules connectées à celui-ci sont ventilés vers l'atmosphère à l'actionnement du connecteur dans ledit mode CPR et un deuxième mode de transport dans lequel ledit tubage et les cellules connectées à celui-ci sont étanchéifiés à l'actionnement et la séparation du connecteur dans ledit mode de transport.

2. Connecteur (100), pour un matelas pneumatique possédant de multiples chambres nécessitant
l'alimentation et l'évacuation indépendantes d'air depuis une pompe de compresseur, le connecteur comprenant trois parties, une première partie étant un bouchon côté matelas (101), une deuxième partie étant un bouchon côté pompe (103) et une troisième partie étant une emboîture intermédiaire (102),
dans lequel le bouchon côté matelas comprend une pluralité de bouts mâles individuels du côté matelas (104), chacun pour connexion au niveau d'une extrémité à des tubes individuels d'alimentation du matelas pour le transport d'air vers et depuis lesdites chambres, et au niveau de leur autre extrémité un premier moyen d'étanchéité partiel (104₁) pour étanchéifier des connexions avec des conduits individuels à travers l'emboîture intermédiaire quand le bouchon côté matelas est connecté de manière détachable à l'emboîture intermédiaire ;
dans lequel l'emboîture intermédiaire comprenant un boîtier (153) incluant lesdits conduits individuels (120) possédant au niveau d'une extrémité un deuxième moyen d'étanchéité partiel pour coopérer avec ledit premier moyen d'étanchéité partiel et au niveau de leur autre extrémité chaque conduit possédant une vanne normalement fermée (122) qui est ouverte quand l'emboîture intermédiaire est connectée de manière détachable au bouchon côté pompe ;
dans lequel le bouchon côté pompe comprend une pluralité de bouts mâles individuels côté pompe (130), chacun pour connexion au niveau d'une extrémité à des tubes individuels d'alimentation de la pompe pour recevoir une alimentation d'air depuis ladite pompe, et au niveau de leur autre extrémité un moyen d'actionnement pour étanchéifier ladite autre extrémité de chaque conduit, et pour ouvrir lesdites vannes, à l'interconnexion de ladite emboîture intermédiaire et du bouchon côté pompe ; et
dans lequel un moyen de libération indépendant est prévu dans le connecteur pour permettre sélectivement la déconnexion CPR et la déconnexion de transport desdites trois parties du connecteur, la déconnexion CPR étant effectuée par l'actionnement d'une libération du CPR (121) qui permet la séparation du bouchon côté matelas et de l'emboîture intermédiaire, après quoi l'air est librement autorisé à s'échapper du matelas (1') depuis lesdits bouts mâles côté matelas, et la déconnexion du transport étant effectuée par l'actionnement d'une libération de transport (198) qui permet la séparation du bouchon côté pompe et de l'emboîture intermédiaire, après quoi l'air est empêché de s'échapper du connecteur depuis lesdits conduits individuels par la fermeture desdites vannes à ladite déconnexion de transport.

3. Connecteur (100) selon la revendication 2, comprenant en outre un ressort (125) disposé entre le bouchon côté matelas et l'emboîture intermédiaire, dans lequel le ressort est compressé quand le bouchon côté matelas est connecté à l'emboîture intermédiaire, moyennant quoi le ressort éjecte le connecteur côté matelas de l'emboîture intermédiaire quand le moyen de libération CPR est actionné.

4. Connecteur (100) selon la revendication 2 ou 3, comprenant en outre un premier moyen de verrouillage pour sécuriser ledit bouchon côté matelas à ladite emboîture intermédiaire, le moyen de verrouillage étant un premier crochet (142) sur l'un dudit bouchon côté matelas et de ladite emboîture intermédiaire et un premier évidement (141) sur l'autre dudit bouchon côté matelas et de ladite emboîture intermédiaire, lesdits premier crochet et premier évidement étant rappelés l'un vers l'autre pour se mettre mutuellement en prise quand le bouchon côté matelas est connecté à ladite emboîture intermédiaire, dans lequel ledit moyen de libération CPR comprend une came (188) adaptée pour être entraînée ente lesdits premier crochet et premier évidement, libérant ledit moyen de verrouillage.

5. Connecteur (100) selon l'une quelconque des revendications 2 à 4, dans lequel le bouchon côté matelas (101) et l'emboîture intermédiaire (102) définissent un axe longitudinal côté matelas et les bouts mâles du bouchon côté matelas sont reçus dans des récepteurs de manchon de matelas (107) du bouchon côté matelas, lesquels récepteurs sont répartis autour dudit axe longitudinal, chaque récepteur de manchon permettant un degré de liberté de mouvement du bout mâle respectif pour permettre une prise mutuelle précise entre lesdites première et deuxième parties d'étanchéité, ladite connexion entre le bouchon côté matelas et l'emboîture intermédiaire est effectuée par un déplacement relatif dans la direction dudit axe longitudinal côté matelas,
en option dans lequel l'une desdites première et deuxième parties étanches comprend un manchon d'entourage de matelas (104₁) et l'autre desdites première et deuxième parties étanches comprend un joint torique (120₄) sur une extrémité de tube de matelas devant être reçue dans et étanchéifier dans ledit manchon 'entourage de matelas.

6. Connecteur (100) selon l'une quelconque des revendications 2 à 5, dans lequel ladite vanne (122) comprend un élément de vanne (127) dans ledit conduit et un ressort de vanne (129) poussant ledit élément de vanne contre un siège dans ledit conduit, ledit moyen d'actionnement comprenant une broche adaptée pour mettre en prise l'élément de vanne à la connexion du bouchon côté pompe avec l'emboîture intermédiaire et déplacer l'élément de vanne dudit siège.

7. Connecteur (100) selon l'une quelconque des revendications 2 à 6, comprenant en outre un deuxième moyen de verrouillage pour sécuriser ladite emboîture intermédiaire sur ledit bouchon côté pompe, le deuxième moyen de verrouillage étant un deuxième crochet (194) sur l'un dudit bouchon côté pompe et de ladite emboîture intermédiaire et un deuxième évidement (196) sur l'autre dudit bouchon côté pompe et de ladite emboîture intermédiaire, lesdits deuxième crochet et deuxième évidement étant rappelés l'un vers l'autre pour se mettre mutuellement en prise quand le bouchon côté matelas est connecté à ladite emboîture intermédiaire, dans lequel ledit moyen de libération de transport comprend un bouton (198) sur ledit deuxième crochet accessible depuis l'extérieur du connecteur pour entraîner la libération dudit deuxième moyen de verrouillage, permettant de la sorte le retrait dudit bouchon côté pompe depuis ladite emboîture intermédiaire.

8. Système de matelas selon la revendication 1, dans lequel ledit connecteur est un connecteur selon l'une quelconque des revendications 2 à 7.

9. Système de matelas selon la revendication 1 ou 8, dans lequel lesdites premières chambres de retournement de toutes les cellules sont en communication fluide les unes avec les autres et lesdites deuxièmes chambres de retournement de toutes les cellules sont en communication fluide les unes avec les autres, et lesdites premières et deuxièmes chambres de retournement ne sont pas en communication fluide les unes avec les autres et ne sont pas en communication fluide avec la chambre supérieure de l'une quelconque cellule et ne sont pas en communication fluide avec les cellules longitudinales.

10. Système de matelas selon la revendication 1, 8 ou 9, dans lequel lesdites cellules longitudinales (8) sont en communication fluide les unes avec les autres et ne sont pas en communication fluide avec les première et deuxième chambres de retournement de l'une quelconque cellule et ne sont pas en communication fluide avec la chambre supérieure de l'une quelconque cellule.

11. Matelas (1') selon la revendication 1, 8, 9 ou 10, dans lequel chaque chambre de la cellule transversale possède un connecteur indépendant pour gonflage et dégonflage des chambres avec l'air,
en option dans lequel ladite communication fluide s'effectue par connexion dudit tubage (7) entre les connecteurs de chaque chambre.

12. Système de matelas selon la revendication 1 ou selon l'une quelconque des revendications 8 à 11, dans lequel lesdites cellules transversales (10) sont chacune constituées de deux feuilles de matériau plastique reliées l'une à l'autre par des coutures soudées étanches à l'air autour de la périphérie des feuilles, les coutures soudées étanches à l'air s'étendant également entre des zones des feuilles pour définir lesdites chambres supérieures (2'), lesdites première et deuxième chambres de retournement (9₁, 9₂) et lesdites ouvertures, toutes étanchéifiées à l'air les unes par rapport aux autres par lesdites coutures.
